# DEMANDE DE BREVET EUROPEEN

(11) **EP 3 741 221 A1**
(43) Date de publication de la demande: **25.11.2020**
(21) Numéro de dépôt: 20173162.7
(22) Date de dépôt: 06.05.2020
(51) Int. Cl.: A23L 7/17

(54) **PRODUIT ALIMENTAIRE EXTRUDÉ, EXPANSÉ, SOUFFLÉ ET/OU GRILLÉ COMPORTANT DE LA FARINE DE SOUCHET**

(30) Priorité: 10.05.2019 EP 19173750
(71) Demandeur: Pure Natural Food SA, 1040 Echallens (CH)
(72) Inventeur: Bocquel, Dimitri, 1941 Vollèges (CH)
(74) Mandataire: Schneiter, Sorin

(57) **Abrégé**

La présente invention concerne un produit alimentaire comportant la farine et/ou le fécule de souchet comme ingrédient. De préférence, l'aliment comporte au moins une autre fécule et/ou une autre farine, comme par exemple de la farine de céréales, tapioca, sarrasin, entre autres. Le produit alimentaire est de préférence un produit extrudé, expansé et/ou soufflé, de préférence à utiliser comme céréale de petit déjeuner. L'invention concerne également une méthode pour préparer le produit alimentaire. La farine et/ou la fécule de souchet est utilisée comme agent de charge dans ledit produit, permet de réduire la teneur en sucre, permet d'augmenter la densité du produit, et permet de fournir un aliment sans gluten.

## Description

### Domaine technique

La présente invention concerne le domaine des produits alimentaires expansés, extrudés, soufflés et/ou grillés, contenant de féculent et typiquement utilisés comme petit déjeuner, tels que les céréales, flocons, en particulier flocons, céréales expansées, par exemple. L'invention concerne plus particulièrement de tels aliments comportant la farine de souchet. L'invention concerne également une méthode pour préparer de tels aliments et l'utilisation de la farine de souchet comme agent de charge et/ou pour diminuer la solubilité du produit alimentaire.

### Etat de la technique et problèmes à l'origine de l'invention

Les cornflakes, flocons, céréales extrudées et/ou expansées, sont connus comme céréales pour petit déjeuner, mais peuvent être consommés à tout moment comme snack ou comme repas à part entière, par exemple mélangés à des fruits. Typiquement, les céréales pour petit déjeuner sont mélangées avec du lait ou une boisson de substitution végétale, comme le lait de soja, lait de riz, jus de fruits, etc, avant être consommées.

Une grande partie de ces céréales présente de nombreux inconvénients, par exemple du point de vu nutritionnelle. D'une part, certains consommateurs ne supportent pas du gluten. Ces personnes ne peuvent pas consommer des céréales comportant la farine de blé, d'avoine, de l'orge, par exemple. Il serait ainsi souhaitable de mettre en ouvre un aliment à base de féculant pouvant être préparé sans gluten. Le gluten possède des propriétés élastiques et peut fonctionner comme une colle permettant d'obtenir une pâte homogène lorsque de l'eau est ajoutée à la farine de céréales. Ces propriétés sont recherchées et il n'est pas dans tous les cas évident de préparer un aliment sans gluten. En particulier, dans le domaine des céréales pour petit déjeuner et plus généralement des aliments à base de féculant pour petit déjeuner, il n'existe pas un grand choix de produits sans gluten. Souvent, ces aliments ont un prix élevé, en raison du choix limité des ingrédients permettant de produire un aliment sans gluten pour petit déjeuner rappelant les céréales pour petit déjeuner, par exemple. Il est un objectif de la présente invention de fournir un nouvel aliment pouvant être utilisé comme remplaçant de céréales pour petit déjeuner et/ou tout simplement un nouveau produit sans gluten, permettant d'agrandir le nombre de produits sans gluten à disposition pour le consommateur.

D'autre part, une grande partie des céréales pour petit déjeuner contient des sucres, par exemple le saccharose, glucose et/ou fructose (ou lévulose). Les propriétés néfastes du saccharose sont connues, tels que l'implication du sucre dans le développement des conditions suivantes : la carie dentaire, du gain de poids, la résistance des cellules du corps à l'insuline, le diabète type 2, l'hypertension, les maladies cardiaques, pour ne citer que quelques-unes. Il est un objectif de la présente invention de pouvoir diminuer la quantité de sucre contenu dans des aliments pour petit déjeuner, par exemple dans les céréales extrudées, expansées et/ou soufflées.

Pour des raisons techniques et économiques il n'est pas facile de réduire la quantité de sucre dans des aliments pour petit déjeuner. Le sucre est bon marché et sert comment agent de charge, par exemple dans les céréales extrudées, expansées et/ou soufflées. L'agent de charge permet d'obtenir un produit expansé ayant une certaine densité. Si la densité des céréales et trop basse, il est nécessaire de consommer un grand volume pour pouvoir obtenir un effet de satiété. Le sucré permet de fonctionner comme agent de charge, en particulier dans les céréales préparées à partir d'un mélange d'ingrédients comportant une farine de céréales (ou autre farine de fécule).

Le sucre permet également de réduire la solubilité des céréales. Comme mentionné ci-dessus, les céréales pour petit déjeuners sont souvent préparées en ajoutant un aliment liquide, tel que le lait, jus, ou lait végétal. Si les céréales sont trop facilement solubles, elles perdent rapidement leur consistance et deviennent pâteuses une fois que l'aliment liquide est ajouté. Les céréales perdent ainsi leur propriété craquante, très souhaitée par le consommateur.

Il peut y avoir d'autres raisons pour lesquelles le remplacement du sucre dans les aliments pour petit déjeuner tels que les céréales extrudées, expansées, soufflées et/ou grillées est difficile.

Il est un objectif de la présente invention de répondre aux inconvénients susmentionnés.

### Résumé de l'Invention

De manière surprenante, l'inventeur a observé que la farine de souchet peut être utilisée pour préparer des aliments extrudés, expansés, soufflés et/ou grillés, tels que les produits à base de fécule du type "céréales pour petit déjeuner". La farine de souchet a des propriétés surprenantes en ce qu'elle peut fonctionner comme agent de charge et permet de réduire la solubilité des céréales. La farine de souchet possède elle-même un goût sucré et est ainsi un ingrédient idéal pour de tels aliments, et en particulier pour diminuer la quantité de sucre dans ces aliments.

Un avantage de l'invention est en particulier qu'elle permet de mettre à disposition au consommateur les vertus alimentaires connus de la noix de souchet, par exemple sous forme d'un produit bien connu, tel que d'un produit du type "céréale pour petit déjeuner". Un effet connu de la noix de souchet est son effet stabilisateur de la glycémie, malgré la présence de sucres dans la farine de souchet. Ceci est un avantage important lorsqu'il s'agit de réduire le contenu en sucre en utilisant une autre source de sucres. Un autre effet associé à la noix de souchet est celui de la réduction du taux du "mauvais" cholestérol (cholestérol LDL).

Dans un premier aspect, la présente invention concerne un produit alimentaire expansé, extrudé, soufflé et/ou et ou grillé, caractérisé en ce qu'il comprend de la farine de noix de souchet. De préférence, le produit alimentaire est un produit à base de fécule.

Dans un autre aspect, l'invention concerne une méthode pour préparer un produit alimentaire expansé, extrudé, soufflé et/ou grillée, comportant:
- préparation d'un ensemble d'ingrédients comportant au moins (a) de la farine de souchet et (b) au moins une source de fécule autre que ladite farine de souchet,
- le mélange et/ou malaxage et la cuisson de l'ensemble d'ingrédients afin de produire un mélange cuit, et,
- la formation de morceaux à partir du mélange cuit.

Dans un autre aspect, l'invention concerne une méthode pour préparer un produit alimentaire expansé, extrudé, soufflé et/ou grillé, comportant (1) le mélange, (2) la cuisson et (3) un ou plusieurs choisi parmi l'extrusion, l'expansion, le soufflement et/ou le grillage d'une composition (ou d'un ensemble) d'ingrédients comportant (a) la farine de souchet, et (b) au moins une autre source de fécule.

Dans un aspect, l'invention concerne un produit alimentaire qui peut être obtenu par une méthode de l'invention.

Dans un aspect, l'invention concerne l'utilisation de la farine de souchet comme agent de charge d'un produit alimentaire expansé, extrudé et/ou soufflé.

Dans un aspect, l'invention concerne l'utilisation de la farine de souchet pour préparer des céréales pour petit déjeuner, ou un produit alimentaire pour petit déjeuner pouvant remplacer les céréales, par exemple un produit alimentaire du type "céréales pour petit déjeuner".

Dans un aspect, l'invention concerne l'utilisation de la farine de souchet comme remplacement d'au moins une partie du sucre dans un produit alimentaire expansé, extrudé, soufflé et/ou grillé. De préférences, ledit produit alimentaire contient une teneur en sucre de moins de 10% en poids de la matière sèche, de préférence moins de 7%, moins de 5% en encore de préférence 4% ou moins en poids de la matière sèche de l'aliment.

Dans un aspect, l'invention concerne une méthode pour diminuer la teneur en sucre dans un produit alimentaire expansés, extrudés, soufflés et/ou grillé, ladite méthode comportant le remplacement d'au moins une partie du sucre par de la farine de souchet.

Dans un aspect, l'invention concerne l'utilisation de la farine de souchet pour diminuer la solubilité d'un produit alimentaire extrudé, expansé, soufflé et/ou grillé.

D'autres aspects de l'invention et des modes de réalisation préférés sont définis dans les revendications et dans la description ci-après.

### Brève description des dessins

Les figures ci-après représentes des modes de réalisation de l'invention sans limiter l'étendue de l'invention.
La **figure 1** est une photo montrant les produits extrudés et expansés selon un mode de réalisation de l'invention.
La **figure 2** est une photo montrant les produits extrudés et expansés selon un autre mode de réalisation de l'invention.

### Description détaillée des modes de réalisations préférés

La présente invention concerne, entre autres, des produits alimentaires comportant de la farine de souchet.

La farine de souchet (ou plus précisément : farine *de noix* de souchets) est une farine obtenue à partir des tubercules des variétés comestibles de la plante *Cyperus esculentus.* Ces tubercules sont connus comme noix de souchets, "tiger nuts" en anglais et encore "Erdmandeln" en allemand. La farine de souchet est une farine de noix de souchets.

Différents types de farine de souchet sont disponibles dans le marché. Dans un mode de réalisation préféré, la farine de souchet est une farine non-déshuilée. Un autre terme pour se référer à ce type de farine est "non-dégraissée".

Dans un autre mode de réalisation, la farine de souchet est une farine déshuilée. L'invention n'exclue pas l'utilisation d'un mélange comportant une farine de souchet non-déshuilée et une farine de souchet déshuilée.

Dans un mode de réalisation la farine de souchet contient de 0 à 30 % de matière grasse, de 30 à 90% de glucides (y compris des sucres), de 5 à 20% de fibres alimentaires, et de 1 à 10% de protéines, exprimé en pourcentage en poids de matière sèche.

La farine de souchet contient de préférence de l'amidon résistant, qui est considéré comme une fibre alimentaire.

De préférence, ledit produit alimentaire est un produit à base de fécule. De préférence, ledit produit alimentaire contient, exprimé en pourcentage en poids de matière sèche, au moins 20%, de préférence au moins 30%, encore de préférence au moins 40%, par exemple 50% en poids ou plus de glucides complexes, tels que l'amidon.

Dans un mode de réalisation préféré, le produit alimentaire contient ladite farine de souchet et une source de fécule autre que ladite farine de souchet. De préférence, le produit alimentaire comporte au moins deux types de farines et/ou de fécules : (a) la farine de souchet et (b) une autre source de fécule. De préférence, ladite source de fécule autre que ladite farine de souchet n'est pas la fécule de souchet.

De préférence, ladite autre source de fécule est une farine, de préférence une farine à base de fécule contenant de préférence de glucides complexes, tels que la fécule. Dans le cadre du présent descriptif, "l'amidon" et "la fécule" sont considérés comme étant la même substance et ces termes peuvent être utilisés de manière interchangeable.

De préférence, selon l'invention, la source de fécule (autre que la farine de souchet) comporte au moins 20%, de préférence au moins 30%, encore de préférence au moins 40%, par exemple 50% en poids ou plus de glucides complexes, tels que la fécule. Dans un mode de réalisation préféré, ladite source de fécule autre que ladite farine de souchet comporte au moins 60%, au moins 70%, et encore de préférence au moins 80% de glucides complexes, tels que la fécule.

Dans le cadre de la présente description, les pourcentages (%) sont en poids et se réfèrent à l'ensemble de la matière sèche, à moins que cela soit indiqué différemment dans un contexte particulier, par exemple si la teneur en eau d'un ingrédient est indiquée.

Dans un mode de réalisation préféré, le produit alimentaire contient de 0.1 à 80%, de 0.1% à 60%, de préférence de 4 à 50%, encore de préférence de 10 à 40% de la farine de souchet.

Dans un mode de réalisation préféré, le produit alimentaire contient de 0.1 à 70% de la farine de souchet, de préférence de 1 à 65%, encore de préférence de 2 à 60%, par exemple de 5 à 50% de la farine de souchet.

Dans un mode de réalisation, le produit alimentaire contient de 5% à 40% de la farine de souchet, exprimé en pourcentage en poids de matière sèche.

Dans un mode de réalisation préféré, le produit alimentaire contient de 5% à 35% de la farine de souchet, exprimé en pourcentage en poids de matière sèche.

Dans un mode de réalisation préféré, le produit alimentaire contient de 6% à 31% de la farine de souchet, exprimé en pourcentage en poids de matière sèche.

Dans un mode de réalisation préféré, la ou les sources de fécule autre que la farine de souchet est choisie parmi les farines, semoules et fécules de céréales, de tapioca, de pommes de terre, de châtaigne, de sarrasin, de pois chiche, de haricot rouge, de haricot noir, de haricot blanc, de bananes, de caroube, de patate douce, d'un tubercule en générale, de quinoa, et de Teff, par exemple. Par exemple, les sources de fécule autre que la farine de souchet est choisie parmi les farines et/ou semoules des parties de plantes précités.

Dans un mode de réalisation, ladite source de fécule autre que la farine de souchet est choisie parmi la farine et la semoule de céréales, par exemple la farine et/ou semoule de riz, de maïs, de blé, d'avoine, par exemple.

Les farines, semoules et fécules de céréales sont, par exemple, la farine et/ou fécule de riz, de maïs, de blé, de froment, d'orge, d'avoine, de millet, de mil, par exemple.

Dans un mode de réalisation, le produit alimentaire de l'invention est un produit sans gluten. Dans ce cas, ladite source de fécule autre que la farine de souchet est choisie parmi les farines et/ou fécules sans gluten, telles que la farine et/ou fécule de riz, de tapioca, de maïs, de bananes, de sarrasin, par exemple.

Dans un mode de réalisation préféré, ladite source de fécule autre que la farine de souchet est la farine de riz.

Plusieurs des farines/fécules précitées, comme la farine de tapioca, sarrasin, bananes, pommes de terre, de caroube, de Teff et de châtaigne ne proviennent pas de céréales.

Si le produit alimentaire ne contient pas de céréales, l'expression "céréale pour petit déjeuner" (ou "breakfast cereal") peut être considérée comme étant inexacte. Néanmoins, le produit alimentaire de l'invention peut de préférence être consommé, par exemple, au petit déjeuner comme un snack entre deux, ou comme repas à part entier, comme une "céréale pour petit déjeuner" typique, malgré l'éventuelle absence de céréales.

Pour cette raison, le présent descriptif peut utiliser l'expression "produit alimentaire du type 'céréales pour petit déjeuner' ", pour désigner le produit de l'invention, et pour indiquer en particulier que le produit peut être dépourvu de céréales. Cette expression désigne ainsi davantage le mode et/ou la façon de consommation, par exemple en y ajoutant un aliment liquide tel que le lait, jus ou autre boisson végétale, que le contenu de l'aliment. De préférence, le produit alimentaire de l'invention peut présenter des propriétés nutritionnelles, organoleptiques, de texture et de goût similaires à celles des céréales pour petit déjeuner, même dans le cas où il ne contient pas de céréales.

Dans le cas d'un produit extrudé et/ou expansé, l'inventeur a constaté que la présence de farine de souchet comme seule source de fécule n'est pas préférable et que la présence d'au moins une autre farine et/ou plus généralement d'une autre source de fécule donne des meilleures propriétés au produit, en particulier de meilleures propriétés organoleptiques et/ou de texture. Dans le cas d'un produit traité par la cuisson-extrusion à l'aide d'une extrudeuse, la farine de souchet seule engendre peu d'expansion. De préférence, ladite au moins une autre source de fécule et choisi de façon qu'une expansion souhaité à lieu. Les quantités de la farine de souchet et de ladite autre source de fécule sont de préférence choisies de façon à obtenir une masse volumique souhaitée, par exemple ayant une valeur comme indiquée dans le présent descriptif. Une autre raison pour ajouter une autre source de fécule est le coût élevé de la farine de souchet.

Dans un mode de réalisation préféré, ledit produit alimentaire comprend de 5 à 99%, de préférence de 10 à 95%, encore de préférence de 15 à 90%, exprimé en pourcentage en poids de matière sèche, une ou plusieurs sources de fécule autre que ladite farine de souchet.

Dans un mode de réalisation préféré, ledit produit alimentaire comprend de 30 à 90% une ou plusieurs sources de fécule autre que ladite farine de souchet.

Dans un mode de réalisation, le produit alimentaire comporte un ou plusieurs sucres. Le ou les sucres peut être choisi parmi le saccharose (sucrose), glucose et fructose (lévulose), par exemple. De préférence, le produit alimentaire comporte du saccharose. L'invention n'exclut pas l'utilisation et/ou la présence d'autres sucres.

Dans un mode de réalisation, le produit alimentaire comporte de 0.1 à 20%, de préférence de 0.5 à 15%, encore de préférence de 1.0 à 10%, exprimé en pourcentage en poids de matière sèche, un ou plusieurs sucres.

Dans un mode de réalisation, le produit alimentaire comporte de 0.1 à 10%, de préférence de 0.5 à 8%, encore de préférence de 1.0 à 7%, exprimé en pourcentage en poids de matière sèche, un ou plusieurs sucres.

Dans un mode de réalisation, le produit alimentaire comporte de 0.25 à 6%, de préférence de 0.6 à 5%, encore de préférence de 1.0 à 4%, exprimé en pourcentage en poids de matière sèche, un ou plusieurs sucres.

Dans un mode de réalisation, le produit alimentaire comporte de 1 à 4% d'un ou plusieurs sucres, par exemple choisi parmi le saccharose (sucrose), glucose et fructose (lévulose).

Dans un mode de réalisation, le produit alimentaire comporte un ou plusieurs sucres, et la teneur en sucre est inférieure à 6%, de préférence inférieure à 5%, encore de préférence inférieure à 4%.

Dans un mode de réalisation, le produit alimentaire est un produit sans sucre ajouté, par exemple ne contient que les sucres présents dans la farine de souchet et dans la ou les sources de fécule autre que la farine de souchet. Dans ce cas, les quantités de sucre indiquées dans ce descriptif proviennent des sucres présents dans la farine de souchet et dans la ou les sources de fécule autre que la farine de souchet.

Si le produit contient du sucre ajouté, les quantités de sucre indiquées dans ce descriptif proviennent de sucre ajouté en plus du sucre naturellement présent dans la farine de souchet et dans la ou les sources de fécule autre que la farine de souchet.

Dans un mode de réalisation, le produit alimentaire comporte de 0.05 à 1.5 % du sel, exprimé en pourcentage en poids de matière sèche.

Le produit alimentaire peut comporter d'autres ingrédients, tels que des huiles/graisses, des arômes, des extraits de plantes, de fruits, des fibres alimentaires, additifs, des agents édulcorants, par exemple. Par exemple, il est possible d'ajouter du cacao, pour ne mentionner qu'un exemple. Le produit alimentaire peut comporter des nutriments ajoutés, comme des macro- et/ou des micronutriments, comme les vitamines, oligoéléments, par exemple.

Un additif qui est souvent ajouté aux ingrédients traités par cuisson-extrusion est le CaCO₃ (carbonate de calcium). Dans un mode de réalisation, le produit alimentaire et/ou l'ensemble d'ingrédients comporte du CaCO₃.

Comme la farine de souchet préférée (nondéshuilée) mentionné ci-dessus comporte de la graisse, la présence de graisse parmi les ingrédients n'est pas strictement nécessaire, mais reste possible et n'est pas exclue. Par exemple, une huile végétale et/ou une huile de beurre peut être ajoutée, par exemple une graisse ou huile végétale autre que l'huile présente dans les noix de souchet. D'autre part, si la farine de souchet déshuilée est utilisée, il peut être préférable d'ajouter une graisse, tel qu'une huile végétale ou l'huile de beurre, par exemple. L'huile et/ou la graisse peut être mélangée avec les autres ingrédients avant d'être ajouté dans l'alimentation (le "feed") du dispositif de mélange et de cuisson. Dans le cas d'une extrudeuse, il est également possible d'injecter les graisses et huiles avec une pompe dans l'extrudeuse, par exemple dans tambour dans lequel sont agencés une, deux ou encore plus de vis.

Dans un mode de réalisation préféré, le produit alimentaire est un produit végétal, c'est-à-dire un produit sans composant d'origine animale, par exemple sans lait et/ou sans composant du lait. De préférence, le produit alimentaire est végane.

Dans un mode de réalisation préféré, le produit alimentaire est sans lactose ("lactose-free").

Dans un mode de réalisation préféré, le produit alimentaire est un produit alimentaire extrudé et/ou expansé. De préférence, un dispositif de mélange et/ou de cuisson des ingrédients est utilisé pour préparer l'aliment, tel qu'une extrudeuse, de préférence une extrudeuse à vis.

De préférence, le produit alimentaire de l'invention est extrudé et expansé à l'aide d'une extrudeuse à vis, de préférence à deux vis.

Dans un autre mode de réalisation, le produit est un produit grillé, tels que les flocons ("flakes") du type "cornflakes".

Dans un mode de réalisation, le produit alimentaire possède une masse volumique MV (densité) de 10 à 400 g/L, de préférence de 20 à 350 g/L, encore de préférence de 25 à 250 g/L. La masse volumique MV est le rapport de la masse du matériau sur le volume réel auquel on a soustrait le volume des pores (ouverts et fermés). La MV est de préférence déterminée à l'aide d'un récipient d'un (1) litre. Ce récipient est rempli du produit de l'invention et ensuite pesé afin de déterminer la MV du produit de l'invention.

Dans un autre mode de réalisation, la masse volumique du produit alimentaire est de 25 à 400 g/L, de préférence 100 à 350 g/L, encore de préférence 150 à 300 g/L.

L'invention concerne également une méthode pour la préparation du produit alimentaire de l'invention.

Dans un mode de réalisation, la méthode comprend:
- la préparation d'un ensemble d'ingrédients comportant de la farine de souchet et au moins une autre source de fécule,
- le mélange/malaxage et la cuisson de l'ensemble d'ingrédients et de l'eau,
- la formation de morceaux à partir du mélange cuit.

Dans un mode de réalisation, l'ensemble d'ingrédients comporte un mélange de farines et/ou de fécules comportant la farine de souchet.

De préférence, la méthode comprend expandre, extruder, souffler et/ou griller les ingrédients afin d'obtenir ledit produit expansé, extrudé, soufflé et/ou grillé.

Un ou plusieurs autres ingrédients peuvent être ajoutés comme mentionnés ci-dessus (sucres, sel, graisses, arômes, additifs (tels que le CaCO₃), extraits de plantes, etc), afin d'ajuster le goût, la texture et les propriétés organoleptiques souhaités du produit alimentaire. Ce ou ces autres ingrédients peuvent être ajoutés lors de préparation de l'ensemble d'ingrédients.

Dans un mode de réalisation, la méthode comporte l'ajout de l'ensemble d'ingrédients à un dispositif de mélange et de cuisson, telle qu'une extrudeuse. De préférence, ledit dispositif de mélange et de cuisson est une extrudeuse, de préférence une extrudeuse à vis. Par exemple, le dispositif est une extrudeuse à une vis, à deux vis ("twin-screw extruder") ou même à plus de deux vis.

Dans un mode de réalisation, le mélange/malaxage et la cuisson de l'ensemble d'ingrédients est effectué à l'aide dudit dispositif de mélange et de cuisson, telle que ladite extrudeuse. De préférence, les fécules présentes dans l'ensemble d'ingrédients sont partiellement ou totalement gélatinisés lors de la cuisson dans ou par ledit dispositif de mélange et de cuisson.

Les ingrédients sont préférence mélangés (ou pré-mélangé) à l'aide d'un mélangeur et ensuite ajouté par une entrée d'alimentation dans l'extrudeuse.

Une fois dans l'extrudeuse, l'ensemble d'ingrédients est mélangé/malaxé à l'aide des vis et exposé à des températures élevées, afin de cuire les ingrédients. De l'eau est généralement ajouté selon un débit constant lors de l'ajout du mélange d'ingrédients dans l'extrudeuse. Les vis effectuent généralement un mélange des ingrédients y compris de l'eau a et transportent les ingrédients vers l'orifice.

Le mélange/malaxage et la cuisson dans l'extrudeuse comporte généralement à faire subir en continu aux ingrédients un traitement mécanique et un traitement thermique simultanés. Pendant ce traitement, certaines des liaisons moléculaires des ingrédients sont modifiées. A la sortie d'extrusion, le produit est généralement extrudé grâce à la force de pression vers l'extérieur.

Dans un mode de réalisation, la méthode comporte la formation de morceaux à partir du mélange cuit, avant, après ou au même temps que d'expandre, d'extruder et/ou souffler dudit du mélange cuit.

Dans un mode de réalisation, la méthode comprend l'extrusion du mélange cuit par un orifice de sortie d'extrusion, et le découpage du mélange cuit à la sortie d'extrusion.

De préférence, le produit alimentaire est produit par l'extrusion à chaud. Dans ce cas, les ingrédients sont transformés en une masse thermoplastique par une action thermomécanique sous pression, à court temps de séjour et température élevée. Grâce aux biopolymères (fécules, glucides complexes) présents dans les ingrédients, il est possible de préparer des produits alimentaires texturés comme des céréales de petit-déjeuner prêtes à consommer et des snacks (salés et sucrés), par exemple.

Lors de l'extrusion à l'orifice, l'eau présent dans la masse thermoplastique s'évapore de manière rapide sous forme de vapeur, créant le produit expansé et poreux lors de l'extrusion.

De préférence, le produit alimentaire de l'invention a une structure et/ou texture poreuse.

Un couteau rotatif est de préférence agencé directement à l'orifice, pour découper la masse thermoplastique et pour former les morceaux, pellets, et autres formes. La forme et la géométrie de l'orifice et/ou la buse d'extrusion peuvent être agencés pour créer des produits ayant une forme souhaitée.

Suite à l'extrusion, expansion et au découpage, il est possible de sécher le mélange cuit et découpé, par exemple pour ajuster et/ou diminuer la teneur en eau du produit alimentaire.

Enfin, le produit alimentaire peut être soumis à d'autres étapes, tels que l'enrobage etc, par exemple pour d'obtenir un produit alimentaire enrobé.

La présente invention permet de mettre en œuvre un produit alimentaire (1) sans ou avec gluten, (2) pouvant être utilisé comme aliment du type "céréale pour petit déjeuner", comme snack ou source de fécule en général, (3) ayant de préférence une teneur en sucre comparativement faible, (4) tout en conservant le goût naturellement sucré des noix de souchets.

Dans le cas d'un produit extrudé, expansé et/ou soufflé, la farine de souchet peut agir comme agent de charge, elle peut être utilisée pour réduire la teneur en sucre, et permet d'ajuster la densité du produit final en choisissant la teneur appropriée.

Selon la présente invention la farine et/ou fécule de souchet est utilisée comme agent de charge dans un produit alimentaire, permet de réduire la teneur en sucre dudit produit, permet d'augmenter la densité du produit, et permet de fournir un aliment sans gluten.

Selon la présente invention, la farine de souchet peut être utilisée pour augmenter la solubilité du produit extrudé, expansé et/ou soufflé.

### Exemples

Des batch de 5kg sont préparés avec les ingrédients indiqués dans le tableau 1. Ces ingrédients étaient utilisés tels que reçus par les fournisseurs et contiennent de l'eau résiduel.

**Tableau 1: Recettes pour aliments comportant la farine de souchet**

| Ingrédient: | Example | | | | | |
|---|---|---|---|---|---|---|
| | 1 | | 2 | 3 | 4 | 5 |
| Unité | % | kg | % | % | % | % |
| Farine de riz | 76.5 | 3.825 | 86.5 | 49.5 | 46.5 | 66.5 |
| Saccharose | 3 | 0.15 | 3 | **0** | 3 | 3 |
| Sel | 0.5 | 0.025 | 0.5 | 0.5 | 0.5 | 0.5 |
| Farine de souchet | **20** | 1.0 | **10** | **50** | **50** | **30** |
| Total: | 100 | 5.0 | 100 | 100 | 100 | 100 |

La farine de souchet était non-dégraissée et comporte, sur 100g, de l'ordre de 26g de graisses, 60g d'hydrates de carbone, 4g de protéines et de fibres alimentaires.

La teneur en eau de la farine de souchet et de la farine de riz est de 10% en poids, selon les spécifications du fournisseur. Le sucre et le sel ne contiennent que de montants insignifiants d'eau. A partir de ces valeurs, il est possible de déterminer le pourcentage en matière sèche des ingrédients dans la recette et ainsi dans le produit final. Les pourcentages des exemples 1-5 sont indiqués dans le tableau 2:

**Tableau 2: Pourcentages en poids de matière sèche des ingrédients**

| | Contenu en poids (%) de matière sèche dans les exemples 1-5 | | | | |
|---|---|---|---|---|---|
| Ingrédient | 1 | 2 | 3 | 4 | 5 |
| Farine de ris | 76.20 | 86.16 | 49.47 | 46.32 | 66.24 |
| Saccharose | 3.32 | 3.32 | 0.00 | 3.32 | 3.32 |
| Sel | 0.55 | 0.55 | 0.56 | 0.55 | 0.55 |
| Farine de souchet | 19.92 | 9.96 | 49.97 | 49.81 | 29.88 |

Le tableau 2 montre que l'humidité présente dans les farines au départ du procédé (10% en poids) n'affecte que marginalement la teneur des ingrédients en matière sèche dans le produit. Ceci s'explique par le fait que dans les cas des exemples 1-5, les farines ont une teneur en eau identique et constituent aux alentours de 95% en poids de l'ensemble des ingrédients.

Les ensembles d'ingrédients selon les exemples 1-5 sont utilisés pour alimenter une extrudeuse à deux vis Evolum 25 de Clextral é Firminy en France.

Le paramètres du traitement (mélange et cuisson) dans l'extrudeuse sont indiqués dans le tableau 3:

**Tableau 3: Paramètres d'opération du mélange et cuisson dans l'extrudeuse à deux vis**

| | Exemple | | | | |
|---|---|---|---|---|---|
| Paramètre | 1 | 2 | 3 | 4 | 5 |
| Débit du mélange sec [Kg/h] | 14 | 15 | 13.1 | 14 | 14.2 |
| Débit d'eau [kg/h] | 0.9 | 1 | 1 | 1.2 | 0.9 |
| Ouverture de l'orifice d'extrusion [mm] | 3 | 3 | 3 | 3 | 3 |
| Vitesse des vis [rpm] | 400 | 400 | 400 | 400 | 400 |
| Vitesse du couteau [rpm] | 2000 | 2000 | 2000 | 2000 | 2000 |
| Energie mécanique spécifique (SME) [Wh/kg] | 140 | 120 | 120 | 120 | 171 |
| Pression du produit avant la sortie [bar] | 67 | 58 | 63 | 48 | 50 |
| Température du produit avant la sortie [°C] | 130 | 121 | 118 | 122 | 120 |

Dans le fourreau de l'extrudeuse, la température était ajustée à 130°C, avec un chauffage graduel de 20, 40°C, 60°, 80°C et 100°C, respectivement dans les sections 1 à 5 de l'extrudeuse (T1-T5) et une température fixée à 130°C dans les 7 sections suivantes (T6-T12).

Dans tous les exemples, le diamètre de l'orifice était de 3mm et la vitesse de rotation du couteau à la sortie de l'orifice était de 2000 rpm.

Dans tous les exemples 1-5 une masse thermoplastique s'est formée lors du mélange et la cuisson dans l'extrudeuse et l'expansion de cette masse à l'orifice de la sortie d'extrusion était constatée. Les morceaux obtenus après le découpage avaient une taille moyenne allant d'environ 5mm à environ 1.2 cm selon la recette. Plus le contenu de farine de souchet était élevé, plus la taille était petite (environ 5mm pour la recette des exemples 3 et 4) et la densité (masse volumique) élevée.

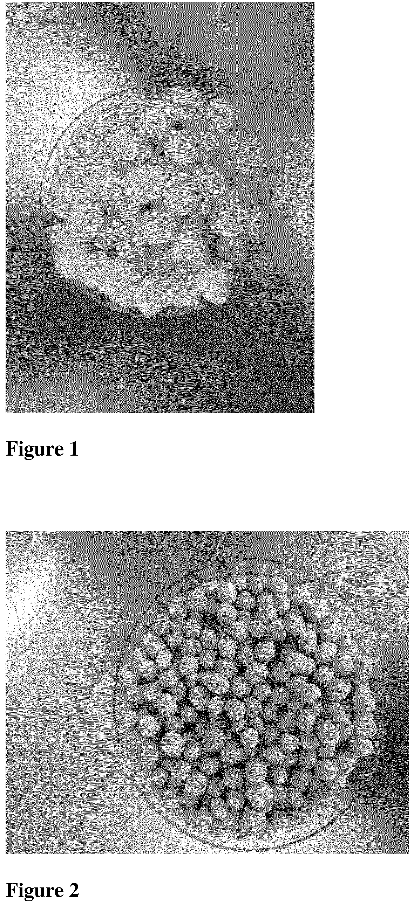

La **figure 1** est une photo montrant les produits extrudés et expansés obtenus selon l'exemple 2, contenant 10% en poids de farine de souchet. Ces produits avaient une masse volumique 31 g/L et le diamètre des sphères étaient de 12mm. La **figure** 2 est une photo montrant les produits de l'exemple 3, ayant 50% en poids de farine de souchet dans la recette (sans sucre ajouté). Ces produits avaient une masse volumique de 230 g/L et le diamètre des sphères étaient de 5mm. La comparaison de ces deux exemples illustre bien la capacité de la farine de souchet d'agir en tant qu'agent de charge, permettant d'augmenter la densité du produit extrudé et/ou expansé.

De manière étonnante, malgré la faible teneur en sucre, tous les produits avaient une bonne densité et restaient croquants pendant quelques minutes suite à l'immersion dans le lait. La solubilité de ces produits était réduite. Le contenu idéal de farine de souchet était de 30% en poids des ingrédients solides.

Les expériences mettent également en évidence de manière surprenante la production d'un produit à base de féculant sans gluten.

## Revendications

1. Un produit alimentaire expansés, extrudés et/ou soufflés, **caractérisé en ce qu'**il comprend de la farine de noix de souchet.

2. Le produit alimentaire selon la revendication 1, **caractérisé en ce qu'**il contient de 0.1 à 80%, de préférence de 0.1 à 60%, de préférence de 4 à 50%, encore de préférence de 10 à 40% de la farine de souchet, exprimé en pourcentage en poids de matière sèche.

3. Le produit alimentaire selon l'une quelconque des revendications de 1 à 2, **caractérisé en ce qu'**il contient une ou plusieurs sources de fécule autre que ladite farine de souchet.

4. Le produit alimentaire selon la revendication 3, **caractérisé en ce qu'**il comprend de 5 à 99%, de préférence de 10 à 95%, encore de préférence de 15 à 90%, exprimé en pourcentage en poids de la matière sèche, une ou plusieurs sources de fécule autre que ladite farine de souchet.

5. Le produit alimentaire selon la revendication 3 ou 4 **caractérisé en ce que** la ou les source de fécule autre que la farine de souchet est choisie parmi les farines, semoules et/ou fécules de céréales, de tapioca, de pommes de terre, de châtaigne, de sarrasin, de pois chiche, de bananes, et de Teff.

6. Le produit alimentaire selon l'une quelconque des revendications précédentes, **caractérisé en ce qu'**il comprend de 0.1 à 10%, de préférence de 0.5 à 8%, encore de préférence de 1.0 à 7%, exprimé en pourcentage en poids de matière sèche, un ou plusieurs sucre, de préférence choisis parmi le saccharose, le fructose (lévulose) et le glucose.

7. Le produit alimentaire l'une quelconque des revendications précédentes, **caractérisé en ce que** ladite farine de noix de souchet est une farine non-déshuilée et/ou non-dégraissée.

8. Le produit selon l'une quelconque des revendications précédentes, **caractérisé en ce qu'**il est un produit alimentaire extrudé, expansé et/ou soufflé, de préférence extrudé et expansé.

9. Le produit selon l'une quelconque des revendications précédentes, **caractérisé en ce qu'**il est un produit sans gluten.

10. Le produit selon l'une quelconque des revendications précédentes, **caractérisé en ce qu'**il possède une masse volumique (MV) de 10 à 400 g/L.

11. Méthode pour préparer un produit alimentaire expansé, extrudé et/ou soufflé, comportant:
- préparation d'un ensemble d'ingrédients comportant au moins:
(a) de la farine de noix de souchet, et
(b) au moins une source de fécule autre que ladite farine de souchet,
- le mélange/malaxage et la cuisson de l'ensemble d'ingrédients afin de produire un mélange cuit,
- l'expansion, l'extrusion et/ou le soufflement du mélange cuit afin d'obtenir ledit produit expansé, extrudé et/ou soufflé.

12. La méthode selon la revendication 11, comportant la formation de morceaux à partir du mélange cuit, avant, après ou au même temps que ladite expansion, extrusion et/ou ledit soufflement du mélange cuit.

13. La méthode selon la revendication 11 ou 12, dans laquelle le mélange/malaxage et la cuisson de l'ensemble d'ingrédients est effectué à l'aide d'un dispositif de mélange et de cuisson, telle qu'une extrudeuse, de préférence une extrudeuse à vis.

14. La méthode selon l'une quelconque des revendications de 12 à 13, comportant l'extrusion du mélange cuit par un orifice de sortie d'extrusion, avant le découpage du mélange cuit pour former des morceaux.

15. L'utilisation de la farine et/ou le fécule de souchet dans les produits alimentaires expansés, extrudés et/ou soufflés comme (1) agent de charge et/ou comme (2) remplacent d'au moins une partie des sucres, et/ou (3)
